(19) Europäisches Patentamt
European Patent Office
Office européen des brevets

(11) Numéro de publication : **0 079 840**
**B1**

(12) # FASCICULE DE BREVET EUROPÉEN

(45) Date de publication du fascicule du brevet : **26.03.86**

(51) Int. Cl.⁴ : **C 04 B 24/26**

(21) Numéro de dépôt : **82402092.9**

(22) Date de dépôt : **17.11.82**

(54) **Agents de rétention d'eau pour plâtres et un procédé pour leur fabrication.**

(30) Priorité : **20.11.81 FR 8121731**

(43) Date de publication de la demande :
**25.05.83 Bulletin 83/21**

(45) Mention de la délivrance du brevet :
**26.03.86 Bulletin 86/13**

(84) Etats contractants désignés :
**AT BE CH DE GB IT LI NL SE**

(56) Documents cités :
**FR-A- 2 439 757**
**US-A- 2 614 998**
**US-A- 3 121 702**
**US-A- 3 197 428**

(73) Titulaire : **NORSOLOR S.A.**
**Tour Gan 16 Place de l'Iris**
**F-92080 Paris la Defense Cedex 13 (FR)**

(72) Inventeur : **Cretenot, Claude-Lise**
**1, rue de la Pinède**
**F-60550 Verneuil-en-Halatte (FR)**
Inventeur : **Vigouroux, Alain**
**24, Allée du Valois**
**F-60500 Chantilly (FR)**
Inventeur : **Wiegert, Bernard**
**2, rue F. Mistral Brenouille**
**F-69870 Rieux (FR)**

(74) Mandataire : **Dubost, Thierry**
**SOCIETE CHIMIQUE DES CHARBONNAGES Service Propriété Industrielle B.P. 57**
**F-62670 Mazingarbe (FR)**

**EP 0 079 840 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention se rapporte à des homopolymères et copolymères acryliques applicables comme agents de rétention d'eau dans les plâtres.

Il est connu d'ajouter aux plâtres de faibles quantités de produits cellulosiques, tels que par exemple la méthyl-hydroxyéthylcellulose, en vue de retenir l'eau de gâchage desdits plâtres. L'amélioration du pouvoir de rétention d'eau, dont une méthode de mesure est décrite ci-après, constitue l'un des objectifs de l'industrie du plâtre. La présente invention se propose de réaliser cet objectif par la mise au point de nouveaux agents de rétention d'eau.

Il est aussi connu d'utiliser des agents de rétention d'eau à base de polyacrylate dans des compositions contenant du ciment (US-A-3 197 428 et US-A-2 614 998).

Un premier objet de la présente invention consiste en des agents de rétention d'eau pour plâtres, caractérisés en ce qu'ils comprennent une solution aqueuse d'au moins un polymère choisi parmi les homopolymères et copolymères contenant de 60 à 100 % d'au moins un acrylate d'alkyle, le radical alkyle ayant de 1 à 8 atomes de carbone, et de 0 à 40 % d'au moins un ester vinylique, lesdits polymères étant hydrolysés à raison de 40 à 80 %.

Les polymères utilisés en accord avec la présente invention sont soit des polyacrylates d'alkyle soit des copolymères d'acrylates d'alkyle et d'esters vinyliques tels que l'acétate de vinyle.

Les agents de rétention d'eau pour plâtres comprennent une solution aqueuse dans laquelle la concentration en poids du polymère est de préférence comprise entre 0,1 et 10 %.

Un second objet de la présente invention consiste en un procédé de fabrication des agents de rétention d'eau pour plâtres décrits précédemment, consistant à préparer ledit polymère par polymérisation en émulsion selon les techniques conventionnelles et au moyen de catalyseurs et activateurs connus, jusqu'à obtenir une émulsion ayant un extrait sec compris entre 10 et 50 % en poids, puis à diluer ladite émulsion jusqu'à une concentration en polymère inférieure à 10 % et à la solubiliser par neutralisation au moyen d'un agent non volatil jusqu'à obtenir un pH compris entre 8 et 11. Parmi les agents de neutralisation non volatils utilisables dans le procédé selon l'invention on peut citer notamment les hydroxydes et carbonates alcalins tels que la soude, la potasse, le carbonate de sodium.

Un troisième objet de l'invention consiste en l'application des agents de rétention d'eau précédemment décrits à l'obtention de plâtres de caractéristiques améliorées, par mélange desdits plâtres avec au moins un tel agent de rétention, la concentration du polymère dans le plâtre étant comprise entre 0,1 et 0,6 % en poids. Les plâtres ainsi obtenus font preuve de caractéristiques de rétention d'eau nettement améliorées, ces caractéristiques étant mesurées par la méthode décrite dans l'exemple 1 ci-après.

Exemple 1

On polymérise 100 parties en poids d'acrylate de méthyle en émulsion dans 230 parties d'eau, en présence de 0,25 partie en poids de persulfate d'ammonium, 0,25 partie en poids de métabisulfite de sodium et 3 parties en poids d'un agent tensio-actif, le monoalkyl sulfosuccinate de sodium, à une température moyenne de 60 °C et pendant 2 heures. Le polymère est ensuite maintenu à 80 °C pendant une heure puis refroidi et filtré sur toile métallique. Le polymère ainsi obtenu, stocké sous forme acide et à l'abri du gel, peut se conserver pendant plusieurs mois.

En vue de constituer un agent de rétention d'eau convenable, ce polymère est hydrolysé à raison de 60 % par traitement à 80 °C par la soude, jusqu'à un pH égal à 9,5. Après 24 heures, un plâtre pur obtenu à partir de sulfate de calcium semi-hydraté selon la réaction :

$$CaSO_4 \cdot 1/2\ H_2O + 3/2\ H_2O \rightarrow CaSO_4 \cdot 2H_2O$$

est mélangé avec de l'eau et avec la solution neutralisée de polymère jusqu'à atteindre une concentration de polymère dans le plâtre égale à 0,45 % en poids. La pâte obtenue est mélangée dans un agitateur pendant 1 minute puis le plâtre est introduit dans un tronc de cône en acier inoxydable dont les dimensions sont : diamètre supérieur 70 mm, diamètre inférieur Ø = 80 mm et hauteur 50 mm. Ce tronc de cône est appliqué par sa base inférieure sur un papier absorbant pour chromatographie de type WHATMAN 3 M, le tout étant supporté par une plaque de verre. On mesure le diamètre D (exprimé en millimètres) de l'auréole d'humidité observée 10 minutes après l'introduction du plâtre dans le cône. On convient d'appeler pouvoir de rétention d'eau la valeur du rapport r = (D − Ø) / Ø. Le diamètre D mesuré est de 83 mm, correspondant à r = 0,037 5.

Exemple 2

On répète l'expérience de l'exemple 1 en remplaçant le polyacrylate de méthyle hydrolysé par un copolymère comprenant 80 % en poids d'acrylate de méthyle et 20 % en poids d'acétate de vinyle, hydrolysé à raison de 60 %. Le diamètre D mesuré est de 80 mm, correspondant à r = 0,00.

Exemple 3 (comparatif)

Dans les mêmes conditions de mesure que celles décrites dans les exemples précédents, on détermine le pouvoir de rétention d'eau du même plâtre pur auquel on a ajouté 0,3 % en poids de méthylhydroxyéthyl cellulose. Le diamètre D mesuré est de 87 mm, correspondant à r = 0,09.

**Revendications**

1. Agents de rétention d'eau comprenant au moins un polymère à base d'acrylate d'alkyle, caractérisés en ce qu'en vue de leur utilisation pour des plâtres ils comprennent une solution aqueuse d'au moins un polymère choisi parmi les homopolymères et copolymères contenant de 60 à 100 % d'au moins un acrylate d'alkyle, le radical alkyle ayant de 1 à 8 atomes de carbone, et de 0 à 40 % d'au moins un ester vinylique, ledit polymère étant hydrolysé à raison de 40 à 80 %.

2. Agents de rétention d'eau pour plâtres selon la revendication 1, caractérisés en ce que l'ester vinylique est l'acétate de vinyle.

3. Agents de rétention d'eau pour plâtres selon l'une des revendications 1 et 2, caractérisés en ce que la concentration du polymère dans la solution aqueuse est comprise entre 0,1 et 10 % en poids.

4. Procédé de fabrication des agents de rétention d'eau pour plâtres selon l'une des revendications 1 à 3, consistant à préparer ledit polymère par polymérisation en émulsion selon les techniques conventionnelles et au moyen de catalyseurs et activateurs connus, jusqu'à obtenir une émulsion ayant un extrait sec compris entre 10 et 50 % en poids, caractérisé en ce qu'on dilue ladite émulsion jusqu'à une concentration en polymère inférieure à 10 % puis on la solubilise par neutralisation au moyen d'un agent non volatil jusqu'à obtenir un pH compris entre 8 et 11.

5. Procédé de fabrication selon la revendication 4, caractérisé en ce que l'agent de neutralisation non volatil est choisi parmi les hydroxydes et carbonates alcalins.

6. Plâtre de caractéristiques améliorées, caractérisé en ce qu'il est mélangé avec au moins un agent de rétention d'eau selon l'une des revendications 1 à 5, la concentration du polymère dans ledit plâtre étant comprise entre 0,1 et 0,6 % en poids.

**Claims**

1. Water-retention agents comprising at least one alkyl acrylate based polymer, characterised in that in view of their use for plasters they comprise an aqueous solution of at least one polymer selected from homopolymers and copolymers containing from 60 to 100 % of at least onealkyl acrylate, the alkyl radical having from 1 to 8 carbon atoms, and from 0 to 40 % of at least one vinyl ester, the said polymer being hydrolysed to the extent of 40 to 80 %.

2. Water-retention agents for plasters according to claim 1, characterised in that the vinyl ester is vinyl acetate.

3. Water-retention agents for plasters, according to one of claims 1 and 2, characterised in that the polymer concentration in the neutral aqueous solution is between 0.1 and 10 % by weight.

4. Process for the manufacture of water retention agents for plasters, according to one of claims 1 to 3, which consists in preparing the said polymer by emulsion polymerisation in accordance with the conventional techniques and using known catalysts and activators, in order to achieve an emulsion having a solid content of between 10 and 50 % by weight, characterised by diluting the said emulsion to a polymer concentration of less than 10 % and then solubilising it by neutralisation with a non-volatile agent in order to achieve a pH of between 8 and 11.

5. Process of manufacture according to claim 4, characterised in that the non-volatile neutralising agent is selected from the alkali metal hydroxydes and carbonates.

6. Plaster having improved characteristics, characterised in that it is mixed with at least one water-retention agent according to one of claims 1 to 5, the concentration of the polymer in the said plaster being between 0.1 and 0.6 % by weight.

**Patentansprüche**

1. Wasserfesthaltende Mittel enthaltend mindestens ein Polymer auf Basis von Alkylacrylat, dadurch gekennzeichnet, daß sie im Hinblick auf ihre Verwendung für Gipsmörtel eine wässrige Lösung mindestens eines Polymers enthalten, das ausgewählt ist aus den Homopolymeren und Copolymeren, die 60 bis 100 % mindestens eines Alkylacrylats, wobei das Alkylradikal 1 bis 8 Kohlenstoffatome besitzt, sowie 0 bis 40 % mindestens eines Vinylesters enthalten, wobei das genannte Polymer in einer Menge von 40 bis 80 % hydrolysiert ist.

2. Wasserfesthaltende Mittel für Gipsmörtel nach Anspruch 1, dadurch gekennzeichnet, daß der Vinylester Vinylacetat ist.

3. Wasserfesthaltende Mittel für Gipsmörtel nach Anspruch 1 oder 2, dadurch gekennzeichnet, daß die Konzentration des Polymers in der wässrigen Lösung zwischen 0,1 und 10 Gew.-% beträgt.

4. Verfahren zur Herstellung von wasserfesthaltenden Mitteln für Gipsmörtel nach einem der Ansprüche 1 bis 3, bei welchem das genannte Polymer durch Emulsionspolymerisation nach den herkömmlichen Techniken und mit Hilfe bekannter Katalysatoren und Aktivatoren hergestellt wird, bis eine eine Trockensubstanz zwischen 10 und 50 Gew.-% aufweisende Emulsion erhalten wird, dadurch gekennzeichnet, daß die genannte Emulsion bis auf eine Polymerkonzentration von weniger als 10 % verdünnt wird und sie dann durch Neutralisation mit Hilfe eines nichtflüchtigen Mittels solubilisiert wird, bis ein pH-Wert zwischen 8 und 11 erhalten wird.

5. Herstellungsverfahren nach Anspruch 4, dadurch gekennzeichnet, daß das nichtflüchtige Neutralisierungsmittel aus den Alkali-Hydroxiden und -Carbonaten ausgewählt ist.

6. Gipsmörtel mit verbesserten Eigenschaften, dadurch gekennzeichnet, daß er mit einem wasserfesthaltenden Mittel nach einem der Ansprüche 1 bis 5 vermischt ist, wobei die Polymerkonzentration in dem genannten Gipsmörtel zwischen 0,1 und 0,6 Gew.-% beträgt.